**Europäisches Patentamt**

**European Patent Office**

**Office européen des brevets**

(19)

(11) **EP 1 243 953 A1**

(12) **EUROPÄISCHE PATENTANMELDUNG**

(43) Veröffentlichungstag:
   **25.09.2002   Patentblatt 2002/39**

(51) Int Cl.7: **G02B 6/36**

(21) Anmeldenummer: **01440081.6**

(22) Anmeldetag: **22.03.2001**

(84) Benannte Vertragsstaaten:
   **AT BE CH CY DE DK ES FI FR GB GR IE IT LI LU
   MC NL PT SE TR**
   Benannte Erstreckungsstaaten:
   **AL LT LV MK RO SI**

(71) Anmelder: **ALCATEL**
   **75008 Paris (FR)**

(72) Erfinder:
   • **Karla, Ingo, Dr.**
     **46514 Schermbeck (DE)**

   • **Luz, Gerhard**
     **74321 Bietigheim-Bissingen (DE)**
   • **Heck, Wolfgang**
     **70839 Gerlingen (DE)**

(74) Vertreter: **Urlichs, Stefan, Dipl.-Phys. et al**
   **Alcatel**
   **Intellectual Property Department**
   **70430 Stuttgart (DE)**

(54) **Verbindung zwischen Faser und Träger**

(57)   Ein optisches Modul besteht aus einem Träger (T) auf dem eine optische Faser (F) befestigt ist. Auf dem Träger (T) ist in eine V-Nut (VG) eingebracht, die zur Befestigung der Faser (F) dient. Senkrecht zu der Nut (VG) ist eine streifenförmige Kontaktschicht (CL) aufgebracht. Die Faser (F) wird in die Nut (VG) eingepreßt. Beim Einpressen der Faser (F) in die Nut (VG) bildet die Kontaktschicht (CL) eine mechanische Verbindung mit der Faser (F) in der Art einer Kaltverschweißung. Dies funktioniert besonders gut bei Glasfasern mit einer Kontaktschicht aus Aluminium (AL). Die Kontaktschicht (CL) besteht vorzugsweise aus mehreren schmalen, senkrecht zur Nut (VG) verlaufenden Streifen.

*Fig. 2*

## Beschreibung

## Technisches Gebiet der Erfindung

Die Erfindung betrifft optische Module wie sie beispielsweise in der optischen Nachrichtenübertragung eingesetzt werden. Genauer gesagt betrifft die Erfindung die mechanische Befestigung von vorzugsweise anorganischen optischen Fasern auf einem Träger.

## Hintergrund der Erfindung

Optische Module wie sie vor allem in der optischen Nachrichtenübertragung eingesetzt werden, bestehen aus optischen oder opto-elektronischen Bauelementen, die auf einem Träger angeordnet und an eine oder mehrere optische Fasern angekoppelt sind. Der Träger, der auch als Board oder Submount bezeichnet wird, besteht häufig aus Silizium. Zur Ankopplung der optischen Faser ist in den Träger eine Nut eingebracht, in die die gestrippte, d.h. von der äußeren Umhüllung befreite, Faser eingelegt und befestigt wird.

Zur Befestigung der Faser bestehen mehrere Möglichkeiten. Die am häufigsten verwendete Möglichkeit ist, die Faser mit Klebstoff, meist einem Epoxy-Harz, in der Nut zu befestigen. Dazu wird die Faser in der Nut justiert um maximale Kopplung zu erzielen und anschließend mit dem Klebstoff fixiert. Dabei kann es während der Aushärtung des Klebstoffs vorkommen, daß die zuvor durch Justierung optimierte Kopplung sich verschlechtert. Der Klebvorgang kann derzeit nicht zufriedenstellend kontrolliert werden was zu verschlechterten optischen Eigenschaften und erhöhtem Ausschuß bei der Herstellung führt. Auf der anderen Seite stellt die Klebstelle einen Schwachpunkt hinsichtlich Zuverlässigkeit und Lebensdauer der optischen Module dar. Der Klebstoff unterliegt begünstigt durch Lichteinwirkung einem Alterungsvorgang. Es besteht zudem der Wunsch nach Epoxy-freien optischen Modulen.

Eine weitere Möglichkeit zur Befestigung der Faser auf dem Träger besteht darin, die Faser zu metallisieren und auf dem Träger zu verlöten. Dazu wird die metallisierte Faser entweder in ein Metallröhrchen auf dem Träger eingelötet oder zwischen dem metallisierten Träger und einer Deckplatte festgelötet. Dieser Ansatz ist technisch sehr aufwendig und teuer. Zum einen sind metallisierte Fasern sehr teuer. Zum anderen muß entweder eine tiefere Nut für das Metallröhrchen in den Träger eingeätzt werden, was Entwicklung und Design neuer Träger erfordert, oder es muß eine Deckplatte vorgesehen werden, was die dafür notwendige Trägerfläche vergrößert. Beides führt dazu, daß die Träger größer dimensioniert werden müssen so daß weniger Träger aus einem Waver hergestellt werden können und zudem ein größeres Gehäuse für das Modul benötigt wird. Ein weiterer Nachteil beim Löten von Fasern ist die mechanische Stabilität. Verlötete Fasern brechen leicht an der Kante des Trägers. Tests haben gezeigt, daß bei Zugbelastung die Fasern in der Regel abbrechen bevor sie herausgezogen werden.

Aus dem Artikel "AIO Bonding: A Method of Joining Oxide Optical Components to Aluminum Coated Substrates" von A. Coucoulas et al, 1993 Proceedings. 43rd Electronic Components and Technology Conference, S.470-481, ist es für die Befestigung kleinerer optischer Elemente wie Kugellinsen und für Fasern bekannt, die Elemente mit $SiO_2$ zu beschichten und unter Anwendung eines Thermo-Kompressionsverfahrens in eine Aluminium-beschichtete Aussparung auf dem Träger einzupressen. Dadurch entsteht eine Kaltverschweißung zwischen der $SiO_2$-Schicht des Elementes und der Aluminiumbeschichtung des Trägers. Dazu muß eine Kugellinse mit einem Anpreßdurck von bis zu 50N in eine entsprechende Aluminium-beschichtete Aussparung eingepreßt werden. Sie bildet dabei an einigen wenigen Kontaktpunkten eine Kaltverschweißung. Fasern werden in eine mit Aluminium beschichtete V-Nut eingepreßt. Da sie auf der ganzen Länge in der V-Nut aufliegt, wird ein im Vergleich zur Kugellinse wesentlich höherer Anpreßdruck benötigt. Dabei besteht die Gefahr, daß der Träger beschädigt oder zerstört wird. Wird der Anpreßdruck niedriger gewählt, um den Träger und die Faser nicht zu beschädigen, so ist die mechanische Verbindung zwischen Faser und Aluminiumbeschichtung unzureichend.

## Zusammenfassung der Erfindung

Aufgabe der Erfindung ist es, eine verbesserte Verbindung zwischen einer optischen Faser und einem Träger sowie ein Verfahren zur Herstellung einer solchen Verbindung anzugeben.

Die Aufgabe wird erfindungsgemäß gelöst, indem auf dem Träger eine Nut eingebracht und aus mehreren im wesentlichen senkrecht zur Nut (VG) verlaufenden Streifen bestehenden Kontaktschicht aufgebracht ist, die bei Einpressen der Faser in die Nut eine mechanische Verbindung mit der Faser bildet.

Ein Vorteil der Erfindung besteht darin, daß der Kontakt zwischen Träger und Faser auf einige kleinere Flächen oder Punkte beschränkt ist, wodurch der Anpreßdruck pro Fläche höher ausfällt, als bei flächiger Beschichtung, ohne daß der maximale Druck, der zur Zerstörung des Trägers führen würde überschritten wird. Durch den höheren Anpreßdruck pro beschichteter Fläche entsteht eine sehr stabile Verbindung auch wenn die Kontaktfläche insgesamt klein ist.

Weitere Vorteile bestehen darin, daß die Herstellung der Verbindung wenig empfindlich für Verschmutzungen ist und daß die Verbindung stabil gegen Brechen der Faser am Trägerrand ist.

## Kurzbeschreibung der Zeichnungen

Im folgenden wird die Erfindung anhand der Figuren 1 bis 4 in zwei Ausführungsbeispielen erläutert.

Es zeigt:

Figur 1: eine Draufsicht auf einen erfindungsgemäß vorbereiteten Träger,

Figur 2: den Träger aus Figur 1 mit eingepreßter Faser,

Figur 3: einen Schnitt entlang der Linie III-III und

Figur 4: einen Schnitt senkrecht zu den rippenförmigen Aluminium-Streifen.

## Detaillierte Beschreibung der Erfindung

Die Erfindung basiert auf dem Grundgedanken, die Faser durch Einpressen auf dem Träger zu befestigen. Hierzu wird auf dem Träger im Bereich einer Nut, in welche die Faser eingepreßt werden soll, eine Kontaktschicht aufgebracht, die beim Einpressen eine Art Kaltverschweißung mit der Faser bildet.

Ein weiterer Grundgedanke besteht darin, die Kontaktschicht nicht auf der ganzen Länge der Nut aufzubringen, sondern nur in schmalen Streifen, die senkrecht zu der Nut angeordnet sind. Dadurch wird der Kontakt zwischen Faser und Kontaktschicht auf wenige räumlich klar definierte Kontaktstellen beschränkt. Anderenfalls, d.h. wenn die Kontaktschicht flächig auf der ganzen Länge der Nut aufgebracht würde, wäre der zur Erzielung der Kaltverschweißung nötige Druck so groß, daß der Träger beim Einpressen zerstört würde.

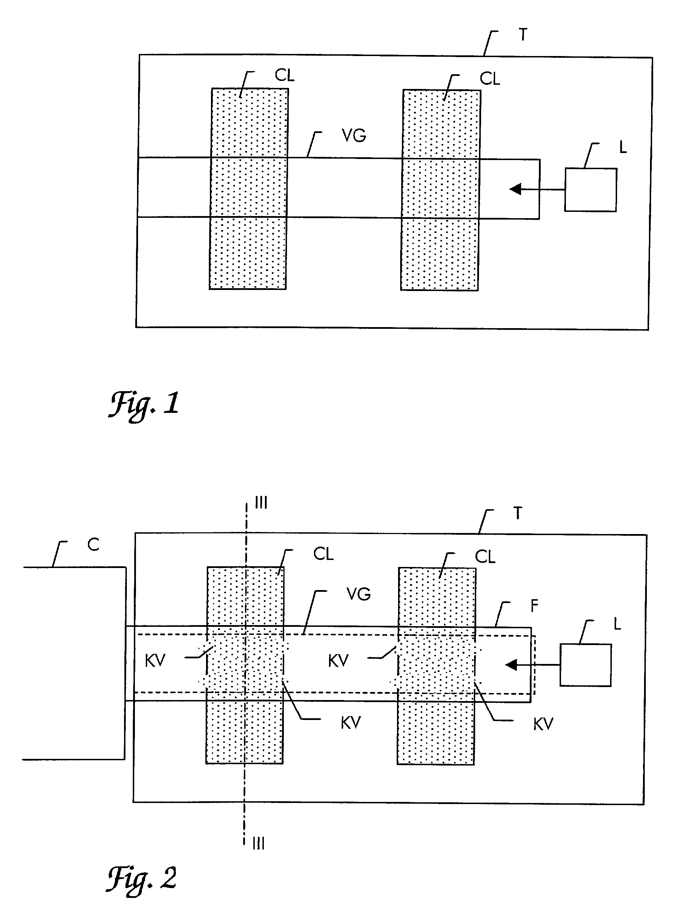

Ein erstes Ausführungsbeispiel der Erfindung ist in den Figuren 1 bis 3 dargestellt. Figur 1 zeigt den Träger T in den eine Nut VG eingeätzt ist. Am Ende der Nut ist ein Halbleiterlaser L auf dem Träger angeordnet, der in Pfeilrichtung Licht emittiert. In die Nut VG soll eine Faser befestigt werden. Dazu sind senkrecht zu der Nut VG schmale Streifen einer Kontaktschicht CL aufgebracht.

Der Träger besteht im Ausführungsbeispiel aus Silizium, die Kontaktschicht ist aus Aluminium. Bei der Nut handelt es sich um eine V-Nut, d.h. um eine Nut mit V-förmigem Querschnitt.

Figur 2 zeigt den Träger T mit darauf befestigter Faser F, die aus Glas, d.h. amorphem $SiO_2$ besteht. Die Faser F ist auf der Länge der Nut von ihrer äußeren Umhüllung C (coating) befreit und in die Nut eingepreßt. Durch Anpressen ist in vier Bereichen KV eine mechanische Verbindung zwischen der Kontaktschicht und der Faser entstanden.

Hintergrund dieser mechanischen Verbindung ist, daß das Aluminium eine chemische Verbindung mit dem $SiO_2$ der Faser eingeht. Dadurch entsteht eine Kaltverschweißung, d.h. eine Verschweißung ohne daß das Material im Bereich der Schweißstelle aufgeschmolzen wurde. Zwischen dem metallischen Aluminium der Kontaktschicht und dem Siliziumoxid der Faser findet dabei folgende Reaktion exotherme statt:

$$3\ SiO_2 + 4\ Al \rightarrow 2\ Al_2O_3 + 3\ Si + Energie$$

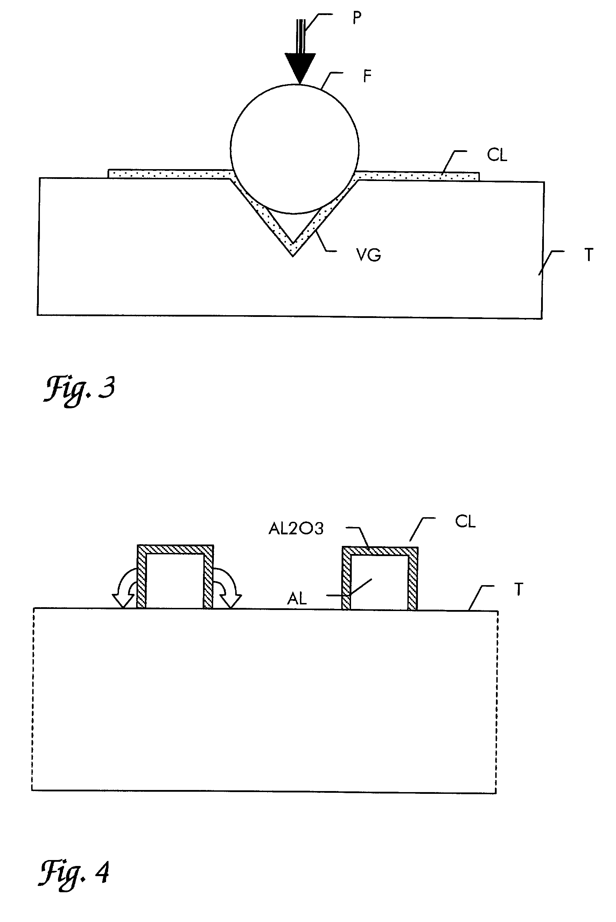

In Figur 3 ist ein Schnitt entlang der Linie III-III abgebildet. In der V-Nut VG des Trägers T liegt die Faser F. Schematisch ist angedeutet, daß auf die Faser F eine Kraft P ausgeübt wird, um sie in die V-Nut VG einzupressen. Dadurch entsteht die Kaltverschweißung mit der Kontaktschicht CL.

Die Faser hat einen Durchmesser von 125μm. Die Breite der Kontaktschichtstreifen wird in etwas derselben Größenordnung wie der Faserdurchmesser gewählt und hat im Ausführungsbeispiel eine Breite von 200μm. Vorteilhaft ist es, zwischen zwei und vier Streifen aufzubringen. Die Gesamtlänge der Kontaktfläche beträgt dann größenordnungsmäßig knapp einen Millimeter.

Aluminium ist als Material für die Kontaktschicht bevorzugt, da es duktil und verformbar ist aber dennoch eine dichte Schicht ergibt und zudem billig ist und einfach aufgebracht werden kann. Zudem kommt Aluminium auch in anderen Prozeßschritten in der Herstellung von optischen oder opto-elektronischen Schaltungen ohnehin häufig vor. Neben Aluminium eignen sich aber auch andere Materialien, vorzugsweise Metalle, für die Kontaktschicht. Besteht die Faser nicht aus $SiO_2$, so kann sie alternativ auch mit $SiO_2$ beschichtet sein. Auch für die Faser oder Faserbeschichtung kommen andere Materialien in Frage. Wichtig ist nur, daß sich beim Einpressen eine mechanische Verbindung zwischen der Faser und der Kontaktschicht ergibt.

Die Erfindung ist auch nicht auf V-förmige Nuten beschränkt. Vielmehr kann die Nut auch Trapez- oder U-förmig sein. Die Form der Nut ergibt sich meist durch die Ausrichtung der Kristallrichtung beim Ätzen der Nut. Von Vorteil ist es allerdings, wenn die Faser in der Nut wohl definierte Auflagepunkte hat, die sich aus der Geometrie der Nut und dem Faserdurchmesser ergeben.

In einer vorteilhaften Weiterbildung der Erfindung werden eine Vielzahl wesentlich schmalerer Kontaktschichtstreifen aufgebracht. Die Streifen haben dann die Form von einzelnen Rippen mit freiem Raum dazwischen. Die Breite dieser Rippen kann zwischen einigen Mikrometern und einigen zehn Mikrometern gewählt werden. Dies hat den Vorteil, daß die passivierende $Al_2O_3$-Schicht (Aluminiumoxid), die sich auf metallischem Aluminium an sauerstoffhaltiger Atmosphäre schnell bildet, beim Aufpressen der Faser leicht geknackt und in den freien Raum beiseite gedrückt werden kann. In Figur 4 ist ein Schnitt quer zu solchen Aluminium-Rippen gezeigt. Auf dem Träger T sind zwei Aluminium-Rippen CL angeordnet. Sie bestehen aus metallischem Aluminium AL in der Mitte und einer passivierenden Aluminiumoxid-Schicht AL2O3 auf deren Außenflächen. Bei der linken Rippe ist durch Pfeile angedeutet, was beim Aufpressen der Faser passiert: Die Aluminiumoxid-Schicht wird auf der Oberseite durch den Druck geknackt und das Aluminiumoxid wird seitlich in den freien Raum gedrückt. Dadurch erscheint mehr elementares Aluminium an der Oberseite um die Kaltverschweißung mit der Faser zu bilden.

Dies kann nun auf zweierlei Weise angewendet werden. Zum einen kann eine durchgehende Aluminium-Schicht flächig aufgebracht und anschließend z. B. durch Ätztechnik in eine Vielzahl einzelner Rippen strukturiert werden. Die Rippen haben dabei z.B. eine Breite von jeweils 10μm. Der freie Raum zwischen den Rippen kann eine Breite von beispielsweise 50μm haben. Die Gesamtlänge der Kontaktfläche beträgt dann größenordnungsmäßig wieder knapp einen Millimeter. Alternativ können auch die Kontaktschichtstreifen aus dem ersten Ausführungsbeispiel in mehrere einzelne Rippen unterteilt sein. Z.B. kann der 200μm breite Streifen in 10 Rippen a 10μm unterteilt sein mit jeweils 10μm freien Raum dazwischen.

Die Herstellung des erfindungsgemäßen optischen Moduls erfolgt folgendermaßen. Zunächst wird in den Träger eine Nut eingebracht. Dies erfolgt auf an sich bekannte Weise, z.B. durch Naßätzen mit einer lithographisch erzeugten Maske. Anschließend wird die Kontaktschicht aufgebracht.

Das Aufbringen der Kontaktschicht erfolgt vorzugsweise durch Sputtern. Sputtern ist ein Beschichtungsverfahren durch Kathodenzerstäubung meist von Metallen. In einer Entladungsröhre werden ionisierte Füllgasmoleküle durch einer Beschleunigungsspannung auf eine Kathode beschleunigt. Die Kathode, die aus dem Material besteht, das aufgebracht werden soll, wird dabei zerstäubt und die Kathodenpartikel lagern sich auf dem zu beschichtenden Substrat, in diesem Fall der Träger, an. Vorzugsweise wird vor dem Träger eine Blende justiert, die Schlitze aufweist für die Kontaktschichtstreifen. Aluminiumpartikel von der Kathode gelangen so nur durch die Schlitze auf den Träger und lagern sich dort in Form von Streifen an.

Alternativ kann die Kontaktschicht auch flächig aufgebracht und anschließend mittels bekannter Ätztechniken zu Streifen oder schmalen Rippen strukturiert werden. Dies ist erforderlich, wenn besonders schmale Kontaktschichtstreifen aufgebracht werden sollen.

Nach Aufbringen der Kontaktschicht ist es vorteilhaft den Träger bis zum Einpressen der Faser unter Inertgasatmosphäre oder Vakuum zu halten um Oxidation der Oberfläche zu vermeiden.

Zuletzt wird die gestrippte Faser in die Nut eingelegt und bei einer Temperatur von etwa 200° bis 400°C eingepreßt, wodurch sich die mechanische Verbindung zwischen Kontaktschicht und Faser ergibt. Die Temperatur beim Einpressen liegt vorzugsweise zwischen 300° und 350°C, typischerweise z.B. bei 325°C. Höhere Temperaturen sind dabei prinzipiell wünschenswert, jedoch muß darauf geachtet werden, daß der Träger nicht durch zu hohe Temperaturen zerstört oder in Mitleidenschaft gezogen wird. Bei einer Kontaktschicht aus anderen Materialien als Aluminium können selbstverständlich andere Temperaturen beim Einpressen notwendig sein.

Die Breite der Kontaktschichtstreifen stellt einen Kompromiß zwischen mechanischer Festigkeit der Verbindung und zulässigem Anpreßdruck dar. Bei einem mechanisch besonders stabilen Träger, bei dem ein höherer Anpreßdruck toleriert werden kann, kann sogar eine durchgehende Kontaktschicht im ganzen Bereich der Nut sinnvoll sein. Bei weicherem Trägermaterial muß die Breite der Kontaktschichtstreifen kleiner gewählt werden. Selbstverständlich können auch einzelne kleine "Inseln" der Kontaktschicht aufgebracht werden.

Eine weitere vorteilhafte Weiterbildung besteht darin, die Kontaktschicht so aufzubringen, daß sie nicht bis an die Kante des Trägers reicht. Dies trägt der Erkenntnis Rechnung, daß die Kante des Trägers eine potentielle Bruchstelle für die darauf befestigte Faser darstellt. Ist die Faser bis an die Kante des Trägers starr mit dem Träger verbunden, so ist die Gefahr groß, daß bei geringer mechanischer Belastung der Faser diese an der Kante abbricht. Reicht hingegen die Kontaktschicht nicht ganz bis an die Kante, so wird die Faser zwar im letzten Teilstück der Nut noch geführt, ist dort jedoch nicht starr verbunden. Durch die so erreichte Flexibilität der Faser im letzten Teilstück der Nut wird die Gefahr, daß die Faser an der Kante des Trägers bricht vermindert.

**Patentansprüche**

1. Optisches Modul enthaltend ein Träger (T) in dem eine Nut (VG) eingebracht ist und eine in der Nut (VG) befestigte optische Faser (F), **gekennzeichnet durch** eine auf dem Träger (T) aufgebrachte, aus mehreren im wesentlichen senkrecht zur Nut (VG) verlaufenden Streifen bestehenden Kontaktschicht (CL), die bei Einpressen der Faser (F) in die Nut (VG) eine mechanische Verbindung mit der Faser (F) bildet.

2. Optisches Modul nach Anspruch 1, bei dem die streifenförmige Kontaktschicht (CL) aus Aluminium (AL) besteht.

3. Optisches Modul nach Anspruch 1, bei dem die Faser (F) aus $SiO_2$ besteht oder mit $SiO_2$.beschichtet ist.

4. Optisches Modul nach Anspruch 1, bei dem zwischen zwei und vier Streifen mit einer Breite von jeweils etwa 200μm vorgesehen sind.

5. Optisches Modul nach Anspruch 1, bei dem eine Vielzahl von Streifen mit einer Breite von bis zu einigen zehn Mikrometern vorgesehen sind.

6. Optisches Modul nach Anspruch 1, bei dem die Streifen wiederum jeweils in mehrere schmale Rippen strukturiert sind.

**7.** Optisches Modul nach Anspruch 1, bei dem die Nut (VG) eine V-Nut ist.

**8.** Optisches Modul nach Anspruch 1, bei dem bei dem das letzte Teilstück der Nut (VG) in Richtung Trägerkante frei von der Kontaktschicht (CL) ist.

**9.** Träger (T) für ein optisches Modul, enthaltend eine Nut (VG) zur Befestigung einer optischen Faser (F), **gekennzeichnet durch** eine auf dem Träger (T) aufgebrachte, aus mehreren im wesentlichen senkrecht zur Nut (VG) verlaufenden Streifen bestehende Kontaktschicht (CL), die bei Einpressen der Faser (F) in die Nut (VG) eine mechanische Verbindung mit der Faser (F) bildet.

**10.** Verfahren zur Herstellung eines optischen Moduls enthaltend ein Träger (T) in dem eine Nut (VG) eingebracht ist und eine in der Nut (VG) befestigte optische Faser (F), mit folgenden Schritten:

- Einbringen der Nut (VG) in den Träger (T),
- Aufbringen einer aus mehreren im wesentlichen senkrecht zur Nut (VG) verlaufenden Streifen bestehenden Kontaktschicht (CL), die bei Einpressen der Faser (F) in die Nut (VG) eine mechanische Verbindung mit der Faser (F) bildet, und
- Einpressen der optischen Faser (F) in die Nut (VG).

**11.** Verfahren nach Anspruch 10, bei dem die Faser (F) vor dem Einpressen gestrippt wird.

**12.** Verfahren nach Anspruch 10, bei dem das Einpressen bei einer Temperatur von 200° bis 400°C, vorzugsweise von 300° bis 350°C, vorgenommen wird.

**13.** Verfahren nach Anspruch 10, bei dem das Aufbringen der Kontaktschicht (CL) durch Sputtern erfolgt und dabei eine Blende mit Schlitzen für die Kontaktschichtstreifen verwendet wird.

**14.** Verfahren nach Anspruch 10, bei dem die Kontaktschicht (CL) flächig aufgebracht und anschließend durch Anwendung einer Ätztechnik zu im wesentlichen senkrecht zur Nut (VG) verlaufenden Streifen strukturiert wird.

*Fig. 1*

*Fig. 2*

P

F

CL

VG

T

*Fig. 3*

AL2O3
CL
AL
T

*Fig. 4*

**Europäisches Patentamt**

## EUROPÄISCHER RECHERCHENBERICHT

Nummer der Anmeldung

EP 01 44 0081

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 631 162 A (AT & T CORP) 28. Dezember 1994 (1994-12-28) | 1-3, 7-11,13, 14 | G02B6/36 |
| Y | * Zusammenfassung; Abbildung 3 * * Spalte 3, Zeile 26 - Zeile 58 * | 12 | |
| A | * Ansprüche 7,8 * | 4-6 | |
| Y | US 5 178 319 A (COUCOULAS ALEXANDER) 12. Januar 1993 (1993-01-12) * Spalte 2, Zeile 38 - Zeile 43 * | 12 | |
| A | * Zusammenfassung; Abbildung 3 * | 1-7, 11-14 | |
| A,D | COUCOULAS A ET AL: "ALO BONDING: A METHOD OF JOINING OXIDE OPTICAL COMPONENTS TO ALUMINUM COATED SUBSTRATES" PROCEEDINGS OF THE ELECTRONIC COMPONENTS AND TECHNOLOGY CONFERENCE. ORLANDO, JUNE 1 - 4, 1993, NEW YORK, IEEE, US, Bd. CONF. 43, 1. Juni 1993 (1993-06-01), Seiten 470-481, XP000380044 ISSN: 0569-5503 * das ganze Dokument * | 1-14 | |

**RECHERCHIERTE SACHGEBIETE (Int.Cl.7)**

G02B

Der vorliegende Recherchenbericht wurde für alle Patentansprüche erstellt

| Recherchenort | Abschlußdatum der Recherche | Prüfer |
|---|---|---|
| DEN HAAG | 16. November 2001 | Jakober, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 44 0081

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-11-2001

| im Recherchenbericht angeführtes Patentdokument | | Datum der Veröffentlichung | Mitglied(er) der Patentfamilie | | Datum der Veröffentlichung |
|---|---|---|---|---|---|
| EP 0631162 | A | 28-12-1994 | DE | 69413136 D1 | 15-10-1998 |
| | | | DE | 69413136 T2 | 20-05-1999 |
| | | | EP | 0631162 A1 | 28-12-1994 |
| | | | JP | 7140335 A | 02-06-1995 |
| US 5178319 | A | 12-01-1993 | JP | 2662137 B2 | 08-10-1997 |
| | | | JP | 5142457 A | 11-06-1993 |

EPO FORM P0461

Für nähere Einzelheiten zu diesem Anhang : siehe Amtsblatt des Europäischen Patentamts, Nr.12/82